# EUROPEAN PATENT APPLICATION

(11) **EP 1 865 499 A1**
(43) Date of publication of application: **12.12.2007**
(21) Application number: 07252253.5
(22) Date of filing: 05.06.2007
(51) Int. Cl.: G11B 7/0037, G11B 7/24, G11B 23/40

(54) **Optical information recording medium and display rendering method thereof**

(30) Priority: 05.06.2006 JP 2006182482
(71) Applicant: Taiyoyuden Co., Ltd., Tokyo 110-0005 (JP)
(72) Inventor: Kobayashi, Satoshi, Taito-ku, Tokyo, 110-0005 (JP); Kodaira, Takuo, Taito-ku, Tokyo, 110-0005 (JP); Yamada, Eiji, Taito-ku, Tokyo, 110-0005 (JP); Somei, Hidenori, Taito-ku, Tokyo, 110-0005 (JP); Arai, Yuji, Taito-ku, Tokyo, 110-0005 (JP)
(74) Representative: Jackson, Richard Eric

(57) **Abstract**

An optical information recording medium is configured to have a recording layer, a semi-transmissive reflective layer, a heat-generating layer, a reflective layer, a deformation layer, and a protective layer formed sequentially on a first translucent substrate, and the reflective layer and deformation layer are deformed by heat by irradiating a laser beam to the heat generating layer. Diffused reflection of visible light at the deformed reflecting layer manifests an image. Thus, rendering can be performed by an optical information recording device without flipping over the optical information recording medium, and without interfering with the data recording region.

## Description

### BACKGROUND OF THE INVENTION

### 1. Field of the Invention

The present invention relates to an optical information recording medium such as a DVD ± R or the like, and proposes an optical information recording medium having a configuration upon which rendering can be performed by laser beam irradiation, and a display method by the rendering.

### 2. Description of the Related Art

An optical information recording medium such as a CD-R, DVD ± R, Blu-Ray disk or the like, has a configuration wherein a recording layer and a reflective layer are formed on a translucent substrate having a diameter of 12 cm or a diameter of 8 cm. Of these, a CD-R has a recording layer and reflective layer formed on top of a translucent substrate with a thickness of 1.2 mm, but a DVD ± R has a first translucent substrate, having a recording layer and reflective layer, formed to a thickness of 0.6 mm, in order to realize high precision recording. Therefore, in order to match the thickness of that of a CD-R, the DVD ± R is formed by adhering a second translucent substrate thereto, with the same shape and a thickness of 0.6 mm.

The second translucent substrate is normally used as a label face, and so characters, symbols, shapes, designs, or a combination of these can be printed and displayed on the face thereof. Also, a printable layer may be provided so as to print images or characters on the surface thereof with an inkjet printer.

Such an optical information recording medium can easily have images or characters printed on the label face thereof, but in order to perform this printing, a specialized device or a compatible device has been required. Thus, recently technology has been proposed for rendering on an optical information recording medium with a laser beam, using an optical information recording device. For example, in Japanese Unexamined Patent Application Publication No. 2002-203321 or Japanese Unexamined Patent Application Publication No. 2000-173096, there is proposed an optical information recording medium having a region (layer) formed on which rendering on a label face can be performed by laser irradiation, enabling rendering to be easily performed using an optical information recording device. Also, in Japanese Unexamined Patent Application Publication No. 2003-051118, a configuration is proposed whereby a portion of the region for recording data is assigned to a region for rendering images or characters, thus enabling information recording and rendering with no need to flip over the optical information recording medium when rendering.

However, the above proposals have had the following problems. With Japanese Unexamined Patent Application Publication No. 2002-203321 and Japanese Unexamined Patent Application Publication No. 2000-173096, the rendering region is on the opposite side as the face for information recording, so the optical information recording medium needs to be flipped over when rendering. Also, in the case of rendering with an optical information recording device, specifying laser irradiation position based on the means to detect position information such as LPP (Land-Pre-Pit) or ADIP (Address-in-pre-groove) is necessary, but the label face side has no such means to detect position information, so it becomes necessary to provide such means on the label face side. Also, with Japanese Unexamined Patent Application Publication No. 2003-051118, a portion of the data recoding region is used for rendering, so a configuration becomes necessary so that the data recording and rendering do not interfere with one another, and there has been the problem of the data recording region and the rendering region being restricted.

### SUMMARY OF THE INVENTION

The present invention provides an optical information recording medium wherein rendering is enabled with an optical information recording device without flipping over the optical information recording medium, and without interfering with the data recording region.

The present invention provides an optical information recording medium comprising a recording layer and a semi-transmissive reflective layer formed sequentially on a face opposite a light incidence side of a first translucent substrate, wherein a heat-generating layer, a reflective layer, and a deformation layer are formed sequentially from the light incidence direction on the side wherein the recording layer and the semi-transmissive reflective layer are formed. Note that the deformation layer may be formed with a transparent resin which can be deformed by heat, or there may be a space on the side thereof adjacent to the reflecting layer. Further, a protective layer may be formed on the deformation layer.

Also, the present invention provides an optical information recording medium, wherein a second translucent substrate is glued via an adhesive layer onto the side wherein the recording layer and the semi-transmissive reflective layer of the first translucent substrate are formed.

As an example of an embodiment of the optical information recording medium as described above, an optical information recording medium is proposed, wherein a heat-generating layer, a reflective layer, and a deformation layer are sequentially formed onto the side wherein the recording layer and the semi-transmissive reflective layer of the first translucent substrate are formed, and wherein the second translucent substrate is glued via an adhesive layer thereupon. In this case, the adhesive layer and the deformation layer can be shared, i.e. the adhesive layer may also serve as the deformation layer.

Also, as another example, an optical information recording medium is proposed wherein the deformation layer, reflective layer, and heat-generating layer are sequentially formed on one face of the second translucent substrate, and wherein the side on which the recording layer and the semi-transmissive reflective layer are formed on the first translucent substrate, and the side on which said deformation layer, said reflective layer, and said heat generating layer of the second translucent substrate are formed, are glued together via an adhesive layer.

Also as a further example, an optical information recording medium is proposed, wherein the second translucent substrate is glued onto the side of the first translucent substrate whereupon the recording layer and the semi-transmissive reflective layer are formed, via an adhesive layer, and the heat generating layer, reflective layer, and deformation layer are sequentially formed on the face of the opposite side from the face to which is adhered the second translucent substrate. Now, a spiral-shaped groove may be formed wherein positional information in the rotational direction is recorded on the side of the second translucent substrate wherein the heat generating layer and the reflective layer are formed.

Also, the present invention provides an optical information recording medium comprising a semi-transmissive reflective layer, a recording layer, and an optical transparent layer are formed sequentially on a light incidence face side of a first translucent substrate, wherein a heat generating layer, reflective layer, and deformation layer are formed sequentially from the light incidence direction onto the face of the side opposite the side of the first translucent substrate wherein the recording layer and the semi-transmissive reflective layer are formed.

Also, the present invention provides a method for rendering a display on an optical information recording medium, wherein a display is rendered on an optical information recording medium having a recording layer and a semi-transmissive reflective layer formed on one face of a first translucent substrate and a heat generating layer, reflective layer, and deformation layer further formed sequentially from the light incidence direction, and wherein display is rendered on the optical information recording medium by irradiating a laser beam onto the heat generating layer from the same side which is the side from which the laser beam is irradiated at the time of information recording. In this case, laser beam irradiation onto the recording layer and laser beam irradiation onto the heat generating layer may be performed simultaneously.

According to the present invention, the laser beam for rendering can be irradiated from the same side as the laser beam for data recording, so rendering can be performed by an optical information recording device without flipping over the optical information recording medium. Also, known position information detecting means can be used such as LPP or ADIP or the like as means for detecting position information at the time of rendering, and so there is no need for providing new position information detecting means on the label face. Also, the data recording region and the rendering region are divided, an optical information recording medium enabling rendering can be provided without interfering with the data recording region.

### BRIEF DESCRIPTION OF THE DRAWINGS

Fig. 1 is a schematic cross-sectional diagram showing a first embodiment of an optical information recording medium according to the present invention.

Fig. 2 is a schematic cross-sectional diagram showing the operation of an optical information recording medium according to the present invention.

Fig. 3 is a schematic cross-sectional diagram showing one form of a second embodiment of an optical information recording medium according to the present invention.

Fig. 4 is a schematic cross-sectional diagram showing another form of the second embodiment of an optical information recording medium according to the present invention.

Fig. 5 is a schematic cross-sectional diagram showing a third embodiment of an optical information recording medium according to the present invention.

Fig. 6 is a schematic cross-sectional diagram showing a fourth embodiment of an optical information recording medium according to the present invention.

Fig. 7 is a schematic cross-sectional diagram showing a fifth embodiment of an optical information recording medium according to the present invention.

### DESCRIPTION OF THE PREFERRED EMBODIMENTS

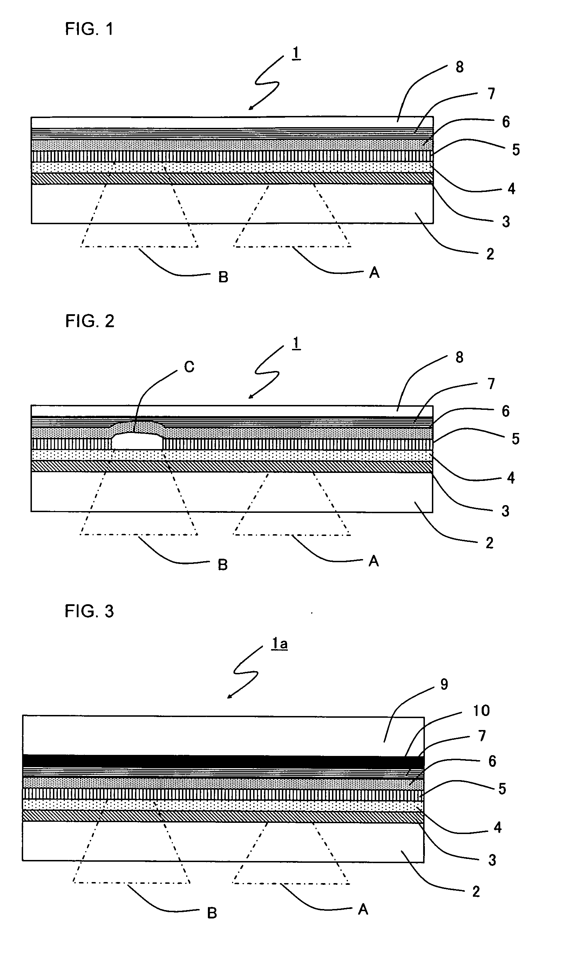

A first embodiment relating to an optical information recording medium according to the present invention will be described based on Figs. 1 and 2. Fig. 1 is a schematic cross-sectional diagram of an optical information recording medium according to the present invention. An optical information recording medium 1 is configured so that a recording layer 3, a semi-transmissive reflective layer 4, a heat generating layer 5, a reflective layer 6, a deformation layer 7, and a protective layer 8 are sequentially formed on a first translucent substrate 2. Note that the protective layer 8 may also serve as the deformation layer 7, and is optional. A broken line A represents a laser beam for recording or for playback, and a broken line B represents a laser beam for rendering.

The first translucent substrate 2 is configured with a transparent resin such as a polycarbonate, and is formed to be a substrate in a specified shape (donut shape in the case of an optical disk) with a method such as injecting forming. The recording layer 3 is a layer including organic colorant, whereby pits are formed with irradiation of a laser beam of a predetermined wavelength and data is recorded therein. As for the colorant used, an azo colorant or cyanine colorant is desirable. The semi-transmissive reflective layer 4 is configured to reflect the laser beam A for playback and transmit the laser beam for rendering. As for materials, a metal (Ag, Ag alloy, or Al) or dielectric multilayer film, wherein oxide films with differing refractive indexes are layered together, is used. The heat generating film 5 is a layer including organic colorants similar to that of the recording layer 3, and generates heat from the irradiation of the laser beam of a predetermined wavelength, or the volume thereof changes at the same time the heat is generated. As for the colorant used, an azo colorant or cyanine colorant is suitable, but a material with a different light absorption from that of the recording layer 3 is desirable.

The reflective layer 6 is a reflective layer formed with a metal. This reflective layer 6 melts and deforms from the heat generated in the heat generating layer 5 or deforms in accordance with volume changes in the heat generating layer, and the deformed portion enables display of a rendered image by diffused reflection or transmission of the visible light. Examples of metals used include Ag, Ag alloy, Al, Al alloy, as well as In with a low melting point, and so forth. The deformation layer 7 may be formed with a transparent material which can easily be deformed by heat or deformed by pressure, so as not to obstruct the deforming of the reflective layer 6, or may be formed as a layer with a space formed between this layer and the reflective layer 6. Examples of materials which easily deform by heat or deform by pressure include chain polymers, thermoplastic resin, gel-type polymeric resin, and so forth. Particularly with regard to chain polymers, examples include acrylics, polystyrenes, vinyl toluene, rosin esters, and so forth. The protective layer 8 is formed of a transparent resin such as an acrylic UV-hardening resin or a solvent-soluble polymeric resin or the like.

A method for rendering on the optical information recording medium 1 thus configured will be described based on Fig. 2. The laser beam B for rendering is irradiated from the same direction as the recording laser beam A. The laser beam B transmits through the semi-transmissive reflective layer 4 and is absorbed in the heat generating layer 5, whereby the colorants in the heat generating layer 5 are decomposed to generate heat, or the volume thereof changes simultaneous to the heat generating. Subsequently, a deformed portion C is generated by the melting deforming of the reflective layer 6 or the volume change from the decomposition gas of the colorants in the heat generating layer 5. The visible light is diffusely reflected or transmitted by the deformed portion C, thereby generating a portion having a different reflection amount from the other portions of the reflective layer 6. The image can be seen based on these differences of the reflective amounts.

Note that the recording layer 3 is formed in a different region from the heat generating layer 5, and so these will not interfere with one another. Also, the laser beam A irradiating the recording layer 3 and the laser beam B irradiating the heat generating layer 5 have different focal differences, and so even if laser beams with the same wavelength are used, interference can be avoided by focal point control. Note that the light absorption properties (absorbancy) of the recording layer 3 and the heat generating layer 5 may be configured to be different from one another, as an additional precaution. In this case, the peak difference of absorbancy may be 75 nm, preferably 100 nm or more, or further preferably 125 nm. For example in the case of a DVD, the laser beam wavelength for recording is generally around 660 nm, so the laser beam wavelength for rendering can be around 785 nm.

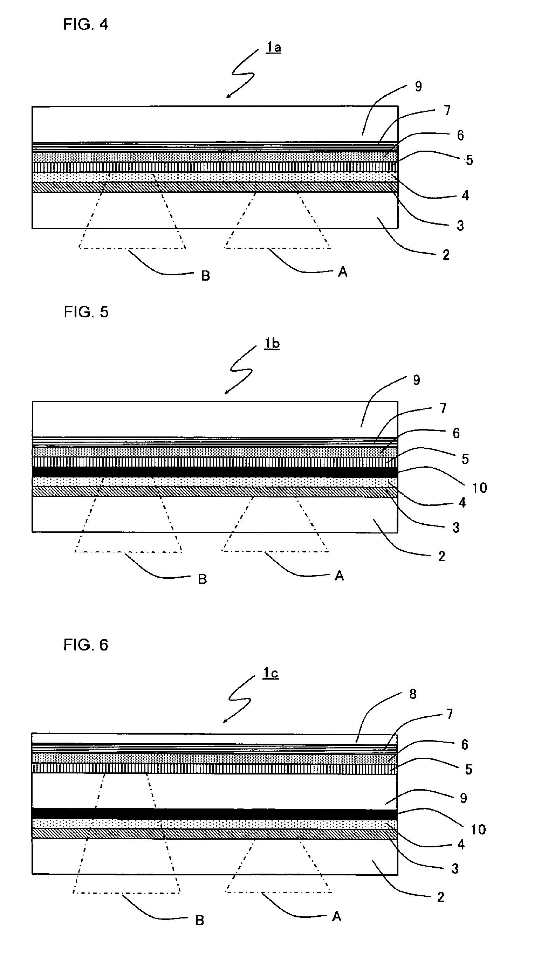

Next, a second embodiment relating to the optical information recording medium according to the present invention will be described with reference to Figs. 3 and 4. The optical information recording medium 1a shown in Fig. 3 is configured by gluing a second translucent substrate 9 instead of the protective layer, via an adhesive layer 10. A DVD ± R or an HD-DVD or the like has such a configuration in order to match the thickness of a CD-R or the like. Note that examples of rendering methods are the same as that described above with the first embodiment. An example of an adhesive layer 10 is an epoxy adhesive or the like.

Note that the optical information recording medium 1a is configured such that the deformation layer 7 also serves as the adhesive layer. An adhesive in this case is preferably an adhesive which does not block the deforming of the reflective layer 6, and an example thereof is a chain polymer or the like.

An optical information recording medium such as DVD ± R or the like having such a configuration has position information detecting means such as LPP (unshown) for a DVD-R or ADIP (unshown) for DVD+R. In the case of rendering with a laser beam, the optical disk is rotating, and therefore laser irradiation is performed based on the position information. Thus, position information detecting means is necessary, but since the laser beam for rendering can be irradiated from the same direction as the laser beam for data recording with the present invention, known position information detecting means such as LPP or ADIP or the like can be used.

Next, a third embodiment relating to the optical information recording medium according to the present invention will be described with reference to Fig. 5. The optical information recording medium 1b shown in Fig. 5 is configured by sequentially forming a recording layer 3, semi-transmissive reflective layer 4, adhesive layer 10, heat generating layer 5, reflective layer 6, deformation layer 7, and a second translucent substrate 9 on the first translucent substrate 2. An adhesive layer 10 is formed between the data recording region and the rendering region.

With such a configuration, an adhesive layer 10 is between the recording layer 3 and the heat generating layer 5, thus enabling effective rendering to be further improved, without interfering with the data recording region. Also, the recording layer 3 and semi-transmissive layer 4 are separated from the heat generating layer 5, thereby enabling reduction in influence from the heat or volume changes generated at the heat generating layer 5 to the recording layer 3 and semi-transmissive reflective layer 4.

Such an optical information recording medium 1b can be obtained as follows. First, the recording layer 3 and the semi-transmissive reflective layer 4 are sequentially formed on the first translucent substrate 2. Next, the deformation layer 7, reflective layer 6, and heat generating layer 5 are sequentially formed on the second translucent substrate 9. Next, the face of the first translucent substrate 2 having formed thereupon the recording layer 3 and the semi-transmissive reflective layer 4, and the face of the second translucent substrate 9 having formed thereupon the deformation layer 7, reflective layer 6, and heat generating layer 5 are glued together via an adhesive layer 10. The optical information recording medium 1b thus obtained is configured as shown in Fig. 5.

Next, a fourth embodiment relating to the optical information recording medium according to the present invention will be described with reference to Fig. 6. The optical information recording medium 1c shown in Fig. 6 is configured by forming a recording layer 3 and semi-transmissive reflective layer 4 on the first translucent substrate 2, and thereupon, via an adhesive later 10, are sequentially formed a second translucent substrate 9, heat generating layer 5, reflective layer 6, deformation layer 7, and protective layer 8.

With such a configuration, the second translucent substrate 9 is between the recording layer 3 and the heat generating layer 5, thus enabling effective rendering to be further improved so as to not interfere with the data recording region. Also with this configuration, the focal point distances of the laser beam irradiating the recording layer 3 and the laser beam irradiating the heat generating layer 5 greatly differ. Therefore a laser beam for recording a CD-R for examples can be used as the laser beam irradiating the heat generating layer 5, and therefore a separate light source from the laser beam irradiating the recording layer 3 can be used.

A recording apparatus which can record on both a DVD ± R and CD-R, i.e. a so-called multi-drive, may have a laser light source for DVD ± R and a laser light source for CD-R. In the case of using such a multi-drive, data recording on the recording layer 3 can be performed simultaneously with rendering on the heat generating layer 5 by using both light sources. This is enabled by software for controlling the recording apparatus.

Also, a spiral-shaped groove with position information in the rotation direction can be provided on the side of the second translucent substrate whereon the heat generating layer and reflecting layer is formed. Thus position information for rendering can be provided, with greater detail than with a method for obtaining position information using LPP or ADIP, and so an image can be rendered with greater precision. Note that the position information recorded in the spiral-shaped groove can be read with the light irradiation from the light incidence face side.

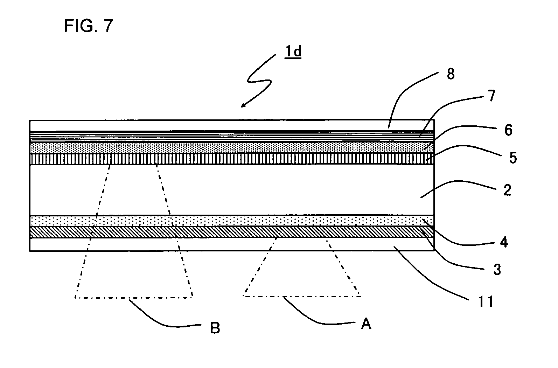

Next, a fifth embodiment relating to the optical information recording medium according to the present invention will be described with reference to Fig. 7. The optical information recording medium shown in Fig. 7 is a configuration in the case of a so-called Blu-ray disk, whereby a semi-transmissive reflective layer 4 and recording layer 3 are sequentially formed on the face of the first translucent substrate 2 on the light incidence side with a thickness of 1.1 mm, and a polycarbonate optical transparent layer 11 with a thickness of 0.1 mm is formed thereupon. On the face of the side opposite from the side of the first translucent substrate 2 on which the recording layer 3 and the semi-transmissive reflective layer 4 are formed, the heat generating layer 5, reflecting layer 6, deformation layer 7, and protective layer 8 are formed sequentially from the light incidence direction.

With such a configuration, the recording layer 3 and the heat generating layer 5 are separated, so rendering can be performed without interfering with the data recording region. Also with this configuration, the focal point distances of the laser beam irradiating the recording layer 3 and the laser beam irradiating the heat generating layer 5 differ greatly, and since the laser beam for recording on a CD-R for example can be used as the laser beam for irradiating the heat generating layer 5, a light source which is different from the laser beam irradiating the recording layer 3 can be used, enabling data recording and rendering simultaneously. Also, a groove with position information for data recording may be formed on the face of the first translucent substrate on the light incidence side thereof, with a groove with position information for rendering also being formed on the face opposite the light incidence side.

While embodiments according to the present invention have been described above, the shape and so forth of the optical information recording medium is not restricted and should be applicable if within the scope of the present invention.

## Claims

1. An optical information recording medium comprising:
a recording layer and a semi-transmissive reflective layer formed sequentially on a face opposite a light incidence side of a first translucent substrate;
wherein a heat-generating layer, a reflective layer, and a deformation layer are formed sequentially from the light incidence direction on the side wherein said recording layer and said semi-transmissive reflective layer are formed.

2. The optical information recording medium according to Claim 1, wherein a second translucent substrate is glued via an adhesive layer onto the side wherein said recording layer and said semi-transmissive reflective layer of said first translucent substrate are formed.

3. The optical information recording medium according to Claim 2, wherein a heat-generating layer, a reflective layer, and a deformation layer are sequentially formed onto the side wherein said recording layer and said semi-transmissive reflective layer of said first translucent substrate are formed;
and wherein said second translucent substrate is glued via an adhesive layer thereupon.

4. The optical information recording medium according to Claim 2, wherein the deformation layer, reflective layer, and heat-generating layer are sequentially formed on one face of said second translucent substrate,
and wherein the side on which said recording layer and said semi-transmissive reflective layer are formed on said first translucent substrate, and the side on which said deformation layer, said reflective layer, and said heat generating layer of said second translucent substrate are formed are glued together via an adhesive layer.

5. The optical information recording medium according to Claim 2, wherein the second translucent substrate is glued onto the side of said first translucent substrate whereupon said recording layer and said semi-transmissive reflective layer are formed, via an adhesive layer, and the heat generating layer, reflective layer, and deformation layer are sequentially formed on the face of the opposite side from the face to which is adhered said second translucent substrate.

6. The optical information recording medium according to either of Claims 4 or 5, wherein a spiral-shaped groove is formed wherein positional information in the rotational direction is recorded on the side of said second translucent substrate wherein said heat generating layer and said reflective layer are formed.

7. An optical information recording medium comprising:
a semi-transmissive reflective layer, a recording layer, and an optical transparent layer formed sequentially on a light incidence face side of a first translucent substrate;
wherein a heat generating layer, reflective layer, and deformation layer are formed sequentially from the light incidence direction onto the face of the side opposite the side of said first translucent substrate wherein said recording layer and said semi-transmissive reflective layer are formed.

8. The optical information recording medium according to any one of Claims 1 through 7, wherein said heat generating layer has light absorbing properties differing from those of said recording layer.

9. A method for rendering a display on an optical information recording medium, wherein a display is rendered on an optical information recording medium having a recording layer and a semi-transmissive reflective layer formed on one face of a first translucent substrate and a heat generating layer, reflective layer, and deformation layer further formed sequentially from the light incidence direction;
and wherein rendering is performed on said optical information recording medium by irradiating a laser beam onto said heat generating layer from the same side which is the side from which the laser beam is irradiated at the time of information recording.

10. A method for rendering a display on an optical information recording medium according to Claim 9, wherein laser beam irradiation onto said recording layer and laser beam irradiation onto said heat generating layer are performed simultaneously.
